# EUROPÄISCHE PATENTSCHRIFT

(11) **EP 1 915 901 B1**
(45) Veröffentlichungstag und Bekanntmachung des Hinweises auf die Patenterteilung: **02.12.2009**
(21) Anmeldenummer: 06022273.4
(22) Anmeldetag: 25.10.2006
(51) Int. Cl.: A01J 7/00, A01J 25/00

(54) **Verteilermodul**
Module of manifolds
Module de distributeurs

(43) Veröffentlichungstag der Anmeldung: 30.04.2008
(73) Patentinhaber: Stulz Wasser- und Prozesstechnik GmbH, 79865 Grafenhausen (DE)
(72) Erfinder: Finnah, Josef, 49661 Cloppenburg (DE)
(74) Vertreter: Stenger, Watzke & Ring

(56) Entgegenhaltungen:
- DE-C1- 4 421 384
- US-A1- 2003 168 107

## Beschreibung

Die Erfindung betrifft ein Verteilermodul für ein fließfähiges Medium mit einer Mehrzahl von in Reihe hintereinander geschalteten Verteilereinrichtungen.

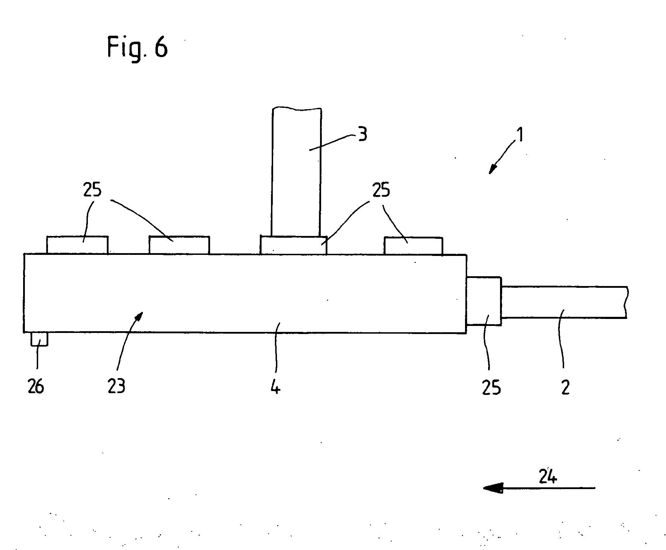

ßVerteilereinrichtungen für fließfähige Medien sind aus dem Stand der Technik an sich bekannt ziehe z.B. Figur 6..

In der Regel verfügen Verteilereinrichtungen gemäß Figur 6 für fließfähige Medien über ein Verteilerrohr, an welches ein Zuführungsrohr einerseits sowie zumindest ein Abführungsrohr andererseits anschließbar sind. Über das Zuführungsrohr gelangt das fließfähige Medium in das Verteilerrohr, wo dann eine Verteilung des fließfähigen Mediums auf die an das Verteilerrohr strömungstechnisch angeschlossenen Abführungsrohre stattfindet. Die an das Verteilerrohr angeschlossenen Abführungsrohre können strömungstechnisch vom Verteilerrohr entkoppelt werden, beispielsweise durch entsprechende Ventile, die eine Einströmung des fließfähigen Mediums aus dem Verteilerrohr in wenigstens ein Abführungsrohr entweder gestatten oder unterbinden. Mittels einer Verteilereinrichtung ist es also möglich, das fließfähige Medium im Strömungskreislauf zu kanalisieren und wunschgemäß auf vorbestimmbare Abführungsrohre bzw. -leitungen zu verteilen.

"Fließfähige Medien" im Sinne der Erfindung sind insbesondere zumindest während ihrer Herstellung fließfähige Lebensmittel, insbesondere Milchprodukte, wie beispielsweise Milch, Milchmischprodukte, Sahne oder dergleichen. Ferner sind im Sinne der Erfindung unter "fließfähige Medien" auch Reinigungsflüssigkeiten zu verstehen, die zum Zwecke der Reinigung der flüssigkeitsführenden Rohre, Leitungen, Ventile oder dergleichen durch diese hindurchgeführt werden.

Aus dem Stand der Technik ist es bekannt, daß Milchprodukte zum Zwecke der gebrauchsfertigen Aufbereitung unter anderem wärmebehandelt werden, um sie zum Beispiel zu homogenisieren oder zu pasteurisieren. Zur Milchproduktführung, das heißt zur Führung des fließfähigen Mediums sind eine Vielzahl von Rohrleitungen vorgesehen, durch die das Milchprodukt während der gebrauchsfertigen Aufbereitung strömt. Zur Verteilung des fließfähigen Mediums auf einzelne zu durchströmende Rohrleitungen kommen Verteilereinrichtungen gemäß Figur 6 zum Einsatz. Obgleich sich die aus dem Stand der Technik bekannten Verteilereinrichtungen im alltäglichen Praxiseinsatz bewährt haben, sind sie nicht frei von Nachteilen. So wird es insbesondere als nachteilig angesehen, daß eine Reinigung der vorbekannten Verteilereinrichtungen sehr aufwendig und zeitintensiv ist.

Fig. 6 zeigt eine aus dem Stand der Technik bekannte Verteilereinrichtung. Die Verteilereinrichtung 1 verfügt über ein Verteilerrohr 4, welches Anschlüsse 25 zum Anschluß eines Zuführungsrohres 2 einerseits und eines Abführungsrohres 3 andererseits aufweist. Das Verteilerrohr 4 wird über das Zuführungsrohr 2 mit einem fließfähigen Medium beschickt, wobei das fließfähige Medium in Einströmungsrichtung 24 in das Verteilerrohr 4 gelangt. Das in das Verteilerrohr 4 eingeströmte fließfähige Medium gelangt sodann ausgehend vom Verteilerrohr 4 in das daran angeschlossene Abführungsrohr 3.

Wie die Darstellung nach Fig. 6 erkennen läßt, ist die aus dem Stand der Technik vorbekannte Verteilereinrichtung 1 insoweit von Nachteil, als daß sich im Verteilerrohr 4 ein Stromtodbereich 23 ausbildet. Dieser Stromtodbereich 23 ergibt sich dadurch, daß sich das in das Verteilerrohr 4 über das Zuführungsrohr 2 einströmende fließfähige Medium über den gesamten Volumenraum des Verteilerrohres 4 verteilt, aber nur der mit Bezug auf die Zeichnungsebene nach Fig. 6 rechte Bereich des Verteilerrohrs 4 an das Abführungsrohr 3 angeschlossen ist.

In der Konsequenz kommt es innerhalb des Verteilerrohres 4 zu einem Stromtodbereich 23, der sich mit Bezug auf die Zeichnungsebene nach Fig. 6 im linken Bereich des Verteilerrohres 4 erstreckt. Im Stromtodbereich 23 steht das in das Verteilerrohr 4 eingeführte fließfähige Medium quasi still, das heißt es findet in diesem Bereich 23 keine nennenswerte Strömungsbewegung des fließfähigen Mediums statt.

Die Ausbildung eines Stromtodbereichs 23 ist insofern von Nachteil, als daß es zu ungewünschten Durchmischungen von fließfähigem Medium kommen kann. So kann sich beispielsweise nach einer vorangegangenen Spülung mit einer Reinigungsflüssigkeit noch eine Restmenge einer Reinigungsflüssigkeit im Stromtodbereich 23 des Verteilerrohres 4 befinden, wenn dieses mit einer neuen Charge, zum Beispiel Milch, einem Milchmischprodukt oder dergleichen beschickt wird. In nachteiliger Weise mischt sich dann die im Stromtodbereich 23 noch vorhandene Restreinigungsflüssigkeit mit dem Milchprodukt, dem Milchmischprodukt oder dergleichen. Darüber hinaus erweist sich ein Stromtodbereich 23 auch aus hygienischen Gründen als nachteilig, weil sich hier Bakterien, Keime oder dergleichen festsetzen und vermehren können.

Um die mit einem Stromtodbereich der vorbeschriebenen Art einhergehenden Nachteile zu vermeiden, ist es aus dem Stand der Technik bekannt, Ablaßöffnungen 26 vorzusehen. Derartige Ablaßöffnungen 26 sind zumeist mit einer manuell zu betätigenden Ablaßschraube verschlossen, so daß es möglich ist, die Ablaßöffnungen 26 im Bedarfsfall zu öffnen, um im Stromtodbereich 23 befindliche Restflüssigkeiten ablaufen zu lassen. Darüber hinaus dient die Ablaßöffnung 26 als Zugangsöffnung für entsprechende Reinigungswerkzeuge, womit eine manuelle Reinigung des Stromtodbereichs 23 durchgeführt werden kann.

Eine Befreiung des Stromtodbereichs 23 von etwaigen sich hier angesammelten Restflüssigkeiten ist ebenso wie eine Reinigung des Stromtodbereichs 23 aufwendig und zeitintensiv. Darüber hinaus besteht stets die potentielle Gefahr, daß es bei einer unsachgemäß durchgeführten Reinigung des Stromtodbereichs 23 zu ungewünschten Verunreinigungen innerhalb des Verteilerrohres 4 kommt.

Ausgehend vom vorbeschriebenen Stand der Technik gemäß Figur 6 ist es deshalb die **Aufgabe**, eine verbesserte Verteilereinrichtung vorzuschlagen, die in ihrer gesamten Handhabung vereinfacht ist und gleichzeitig die Möglichkeit einer zuverlässigen Reinigung bietet.

Zur **Lösung** dieser Aufgabe wird eine Verteilereinrichtung vorgeschlagen, wobei das Verteilerrohr als geschlossenes Ringrohr ausgebildet ist.

Das Verteilerrohr ist im Unterschied zum Stand der Technik gemäß Figur 6 nicht als geradliniges, einseitig geschlossenes Rohr, sondern als einen eigenen Strömungskreislauf bereitstellendes Ringrohr ausgebildet, ziehe z.B. Dokument DE-C-4 421 384. Das in das Verteilerrohr über das Zuführungsrohr eingebrachte fließfähige Medium kann im als geschlossenes Ringrohr ausgebildeten Verteilerrohr zirkulieren, weshalb das Verteilerrohr keinerlei Stromtodbereiche aufweist. Die vorerläuterten und mit einem Stromtodbereich einhergehenden Nachteile werden mit der Verteilereinrichtung also vollends vermieden. Darüber hinaus bedarf es bei einem Verteilerrohr nach der Verteilereinrichtung keinerlei Ablaßöffnungen, da dank der geschlossenen ringförmigen Ausgestaltung des Verteilerrohres stets sichergestellt ist, daß das in das Verteilerrohr über das Zuführungsrohr eingebrachte fließfähige Medium über die an das Verteilerrohr angeschlossenen Abführungsrohre vollständig abgeführt wird. Rückstände von fließfähigen Medien verbleiben im Verteilerrohr nach der Verteilereinrichtung nicht.

Da das Verteilerrohr über keinerlei Stromtodbereiche verfügt, ergibt sich eine insgesamt vereinfachte Handhabung. Darüber hinaus ist in einfacher Weise eine zuverlässige Reinigung des Verteilerrohres möglich, da sich mangels etwaiger Stromtodbereiche keine unerwünschten Rückstände von beispielsweise Reinigungsflüssigkeiten oder dergleichen im Verteilerrohr ansammeln können. Die Verteilereinrichtung erlaubt mithin einen vollautomatisierten Betrieb, sei es zu Reinigungszwecken oder zur bestimmungsgemäßen Hindurchführung von fließfähigen Medien in Form von fließfähigen Lebensmitteln, wie zum Beispiel Milch, Milchmischprodukte, Sahne oder dergleichen.

An das als geschlossenes Ringrohr ausgebildete Verteilerrohr können mehrere Abführungsrohre gleichzeitig angeschlossen sein. Zu diesem Zweck verfügt das Verteilerrohr über Anschlußeinrichtungen für den jeweiligen strömungstechnischen Anschluß eines Abführungsrohres. Die Anschlußeinrichtungen weisen jeweils Verschlußvorrichtungen auf, die vorzugsweise in Form von fernsteuerbaren Ventilen ausgebildet sind. Anders als bei den bekannten Verteilereinrichtungen gemäß Figur 6 ist es also nicht erforderlich, ein jeweiliges Abführungsrohr an den gewünschten Anschluß des Verteilerrohres anzuschließen. Sämtliche Abführungsrohre stehen bei der Verteilereinrichtung für ein Hindurchströmen des fließfähigen Mediums vielmehr ständig bereit. Über die Ansteuerung der vorzugsweise als fernsteuerbare Ventile ausgebildeten Verschlußvorrichtungen können die einzelnen an das Verteilerrohr angeschlossenen Abführungsrohre wahlweise geöffnet bzw. geschlossen werden. Ein Umrüsten von Abführungsrohren, wie dies bei den bekannten Verteilereinrichtungen gemäß Figur 6 der Fall ist, ist nicht weiter erforderlich. Auch insofern erweist sich die Verteilereinrichtung als vorteilhaft.

Die Anschlußeinrichtungen zur vorzugsweise lösbaren Anordnung jeweils eines Anschlußrohres verfügen über Koppelelemente. Pro Anschlußeinrichtung sind dabei vorzugsweise zwei Koppelelemente vorgesehen, wobei eines der Koppelelemente dazu dient, die Anschlußeinrichtung an das Verteilerrohr anzuordnen, wohingegen das andere Koppelelement dazu dient, das zugehörige Abführungsrohr an die Anschlußeinrichtung anzuschließen.

Das Verteilerrohr der Verteilungseinrichtung, welches auch als Verteilring bezeichnet werden kann, verfügt vorzugsweise über eine Mehrzahl von Anschlußeinrichtungen, die als Anschlüsse für den jeweiligen Anschluß eines Anschlußrohres dienen. Die Anschlußeinrichtungen bzw. Anschlüsse verfügen über manuell oder automatisch betätigbare Ventile als Verschlußvorrichtungen, wobei als Ventile zum Beispiel Scheibenventile, Schrägsitzventile, Kugelventile, Umschaltventile, Absperrventile oder dergleichen einsetzbar sind, die bevorzugterweise an die jeweilige Anschlußhalsung eines Anschlusses angesetzt sind. Insofern versteht es sich von selbst, daß je nach bestimmungsgemäßer Verwendung der Verteileinrichtung am Verteilerrohr entsprechend viele Anschlüsse für Anschlußrohre vorgesehen sind, wobei die Verschlußeinrichtungen der Anschlußeinrichtungen je nach gewünschtem späteren Einsatzgebiet manuell und/oder automatisch betätigbar sind, so daß eine einfache Handhabung der Verteilereinrichtung gewährleistet ist. Da aufgrund der Ausgestaltung des Verteilerrohrs als Verteilring Strömungstodzonen im Verteilerrohr ausgeschlossen sind, kann die gesamte Verteilereinrichtung wartungsfrei betrieben werden, und zwar sowohl bei einem bestimmungsgemäßen Gebrauch als auch im Reinigungsfall.

Über die Verteilereinrichtung findet eine Verteilung des im Betriebsfall durch die Verteilereinrichtung strömenden fließfähigen Mediums auf die an die Verteilereinrichtung angeschlossenen Abführungsrohre statt. Eine in strömungstechnischer Hinsicht umgekehrte Verwendung der Verteilereinrichtung ist dabei gleichfalls möglich. So kann die Verteilereinrichtung in vorteilhafter Weise auch dazu genutzt werden, in strömungstechnisch umgekehrter Form eine wunschgemäße Vermischung von Medien zu erzielen. So können über die Abführungsrohre auch fließfähige Medien der Verteilereinrichtung zugeführt werden, um so unterschiedlichste fließfähige Medien je nach gewünschter Rezeptur zu einem Gesamtgemisch zu vereinigen. So kann beispielsweise vorgesehen sein, daß bei einer Verteilereinrichtung, die über insgesamt sechs Abführungsrohre verfügt, sowohl über das Zuführungsrohr als auch über vier Abführungsrohre fließfähige Medien in die Verteilereinrichtung einströmen, wo dann eine Vermischung der zugeführten Medien erfolgt. Das auf diese Weise in der Verteilereinrichtung entstehende Gesamtgemisch kann dann über die beiden noch zur Verfügung stehenden Abführungsrohre abgeführt werden, wobei das eine dieser beiden Abführungsrohre beispielsweise an einen Vorratsbehälter strömungstechnisch angeschlossen ist, wohingegen das andere der beiden Abführungsrohre beispielsweise strömungstechnisch an eine weitere Verteileinrichtung angeschlossen ist, wo dann ein weiterer Vermischungsschritt mit anderen fließfähigen Medien stattfinden kann.

Die Verteilereinrichtung ist in vorteilhafter Weise flexibel insofern einsetzbar, als daß sie sowohl dazu benutzt werden kann, das aus dem daran strömungstechnisch angeschlossenen Zuführungsrohr in die Verteilereinrichtung strömende fließfähige Medium auf die an die Verteilereinrichtung angeschlossenen Abführungsrohre zu verteilen, als auch dazu, über das Zuführungsrohr und wahlweise einige der Abführungsrohre in die Verteilereinrichtung einströmende Medien zu einem je nach Rezeptur wunschgemäßen Gemisch zu vereinigen, welches dann über die weiteren an die Verteilereinrichtung strömungstechnisch angeschlossenen Abführungsrohre abgeführt werden kann. Insofern eignet sich die Verteilereinrichtung im Unterschied zu den aus dem Stand der Technik bekannten Verteilereinrichtungen gemäß Figur 6 auch als Mischeinrichtung.

Mit der Erfindung wird ein Verteilermodul vorgeschlagen, das aus einer Mehrzahl von Verteilereinrichtungen der vorbeschriebenen Art verfügt. Mehrere Verteilereinrichtungen, die in Reihe hintereinander geschaltet sind, bilden ein Verteilermodul nach der Erfindung. Dabei sind vorzugsweise die einander zugehörigen Abführungsrohre mehrerer Verteileinrichtungen an eine gemeinsame Rohrleitung angeschlossen. Auf diese Weise ist sowohl der anlagenseitige Aufwand vermindert als auch die Anzahl der zu wartenden und zu reinigenden Rohre verringert.

Weitere Merkmale und Vorteile der Erfindung ergeben sich aus der nachfolgenden Beschreibung anhand der Fign. Dabei zeigen:
- Fig.1: in schematischer Draufsicht von oben eine Verteilereinrichtung;
- Fig. 2: in schematischer Seitenansicht eine Verteilereinrichtung nach Fig. 1;
- Fig. 3: in schematischer Darstellung ein Strömungskreislauf für ein fließfähiges Medium mit insgesamt drei Verteilereinrichtungen nach der Erfindung;
- Fig. 4: in schematischer Seitenansicht ein Verteilermodul, welches aus insgesamt drei Verteilereinrichtungen besteht;
- Fig. 5: in schematischer Seitenansicht ein aus insgesamt vier Verteilereinrichtungen bestehendes Verteilermodul und
- Fig. 6: in schematischer Darstellung eine Verteilereinrichtung nach dem Stand der Technik.

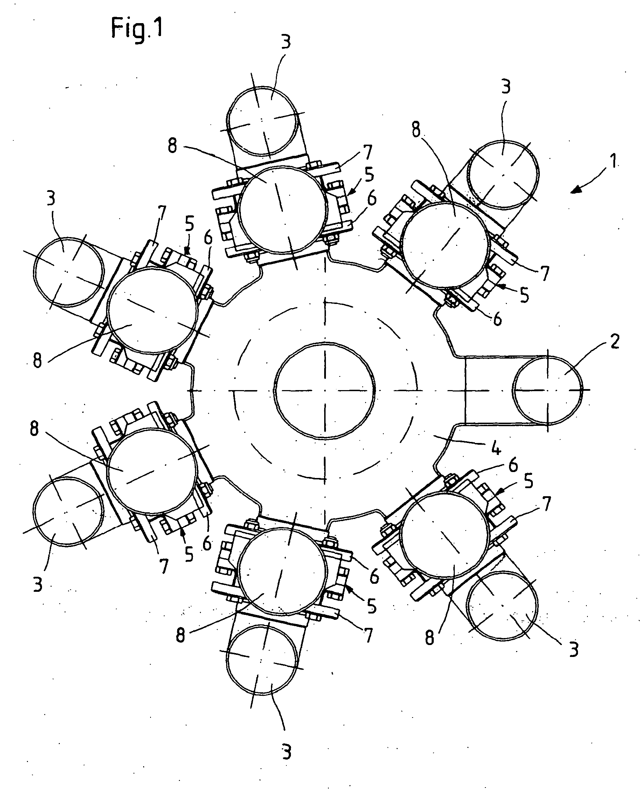

Fig. 1 zeigt in einer schematischen Draufsicht von oben eine Verteilereinrichtung 1. Die Verteilereinrichtung 1 verfügt über ein Verteilerrohr 4, an welches ein Zuführungsrohr 2 sowie insgesamt sechs Abführungsrohre 3 angeschlossen sind. Über das Zuführungsrohr 2 gelangt ein fließfähiges Medium in das Verteilerrohr 4, von wo aus es wahlweise auf ein oder mehrere Abführungsrohre 3 verteilt wird.

Es ist vorgesehen, daß das Verteilerrohr 4 als geschlossenes Ringrohr ausgebildet ist, wie dies am besten der Darstellung nach Fig. 1 entnommen werden kann.

Wie insbesondere die Darstellung nach Fig. 1 erkennen läßt, kann ein fließfähiges Medium über das Zuführungsrohr 2 in das Verteilerrohr 4 einströmen, wobei das Verteilerrohr 4 aufgrund des Umstandes, daß es als geschlossenes Ringrohr ausgebildet ist, einen geschlossenen Strömungskreislauf zur Verfügung stellt, so daß das fließfähige Medium im Verteilerrohr 4 zirkulieren kann. Das als geschlossenes Ringrohr ausgebildete Verteilerrohr 4 ist als 360°-Rohr ausgebildet, so daß ein in das Verteilerrohr 4 eingebrachtes fließfähiges Medium innerhalb des Verteilerrohres 4 mit Bezug auf die Blattebene nach Fig. 1 um 360° zirkulieren kann.

Die Verteilereinrichtung 1 verfügt über Anschlußeinrichtungen 5, die dem jeweiligen strömungstechnischen Anschluß eines Abführungsrohres 3 dienen. Die Anschlußeinrichtungen 5 sind über entsprechende Koppelelemente 6 am Verteilerrohr 4 angeflanscht. Die jeweils zugehörigen Abführungsrohre 3 sind an der jeweiligen Anschlußeinrichtung 5 angeflanscht, was gleichfalls durch ein Koppelelement 7 realisiert ist.

Die Anschlußeinrichtungen 5 verfügen jeweils über Verschlußvorrichtungen, die vorzugsweise als fernsteuerbare Ventile ausgebildet sind. Auf diese Weise ist es möglich, den strömungstechnischen Anschluß zwischen dem Verteilerrohr 4 einerseits und den daran jeweils angeschlossenen Abführungsrohren 3 andererseits zu öffnen bzw. zu sperren. Damit kann das in das Verteilerrohr 4 eingebrachte fließfähige Medium wahlweise auf eines oder mehrere der an das Verteilerrohr 4 angeschlossenen Abführungsrohre 3 verteilt werden. Im gezeigten Ausführungsbeispiel nach Fig. 1 handelt es sich bei den Verschlußvorrichtungen um sogenannte Scheibenventile. Es können aber auch Schrägsitzventile, Kugelventile, Umschaltventile, Absperrventile oder dergleichen Ventile zum Einsatz kommen.

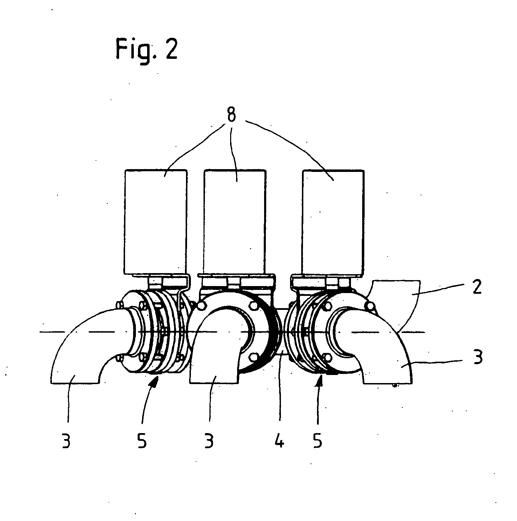

Eine schematische Seitenansicht der Verteilereinrichtung zeigt Fig. 2. Zu erkennen sind hier insbesondere die am Verteilerrohr 4 angeschlossenen Anschlußeinrichtungen 5 sowie die jeweils an die Anschlußeinrichtungen 5 angekoppelten Abführungsrohre 3. Darüber hinaus läßt Fig. 2 erkennen, daß mit Bezug auf die Zeichnungsebene nach Fig. 2 oberhalb einer jeden Anschlußeinrichtung 5 ein Gehäuse 8 ausgebildet ist. Innerhalb dieses Gehäuses 8 ist die Mechanik und/oder Elektronik untergebracht, die der Ansteuerung der jeweiligen Verschlußeinrichtungen, das heißt der Ventile dient. Die Ventile werden beispielsweise mittels pneumatischer Einrichtungen betätigt, wobei die jeweiligen pneumatischen Einrichtungen in dem Gehäuse 8 der jeweils zugehörigen Anschlußeinrichtung 5 untergebracht sind.

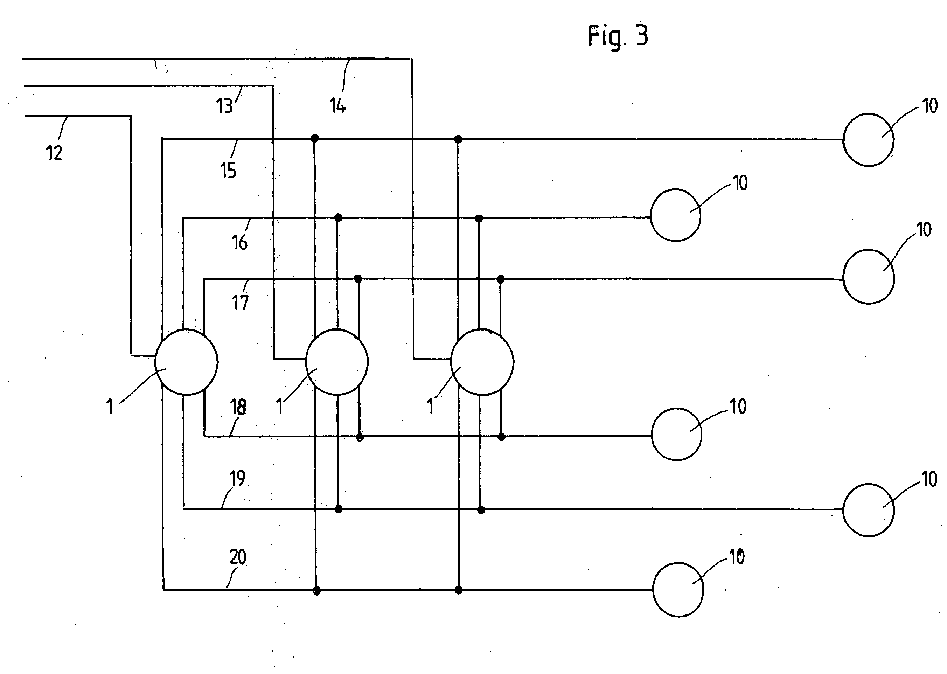

Fig. 3 zeigt in schematischer Ansicht ein Strömungsdiagramm. Nach der Ausführungsform gemäß Fig. 3 sind insgesamt drei Zuführungsleitungen vorgesehen, nämlich die Zuführungsleitung 12, die Zuführungsleitung 13 sowie die Zuführungsleitung 14. Eine jede Zuführungsleitung mündet in einem Zuführungsrohr 2 der vorbeschriebenen Art und ist an eine Verteilereinrichtung 1 angeschlossen. Wie Fig. 3 erkennen läßt, ist die Zuführungsleitung 12 an die mit Bezug auf die Zeichnungsebene nach Fig. 3 linke Verteilereinrichtung 1 angeschlossen, wohingegen die Zuführungsleitung 13 an die mit Bezug auf die Zeichnungsebene nach Fig. 3 mittlere Verteilereinrichtung 1 und die Zuführungsleitung 14 an die mit Bezug auf die Zeichnungsebene nach Fig. 3 rechte Verteilereinrichtung 1 angeschlossen sind.

Die Verteilereinrichtungen 1 nach Fig. 3 sind jeweils an sechs Abführungsrohre 3 und damit an sechs Abführungsleitungen 15 bis 20 angeschlossen. Die Abführungsleitungen 15 bis 20 enden jeweils innerhalb eines beispielhaft dargestellten Vorratsbehälters 10. Dabei versteht sich von selbst, daß die Abführungsleitungen 15 bis 20 endseitig auch an andere Anlagenteile als an Vorratsbehälter 10 angeschlossen sein können.

Über die Zuführungsleitungen 12, 13 und 14 werden die jeweils zugehörigen Verteilereinrichtungen 1 beispielsweise mit unterschiedlichen Produkten beschickt. So kann beispielsweise über die Zuführungsleitung 12 ein Produkt A, über die Zuführungsleitung 13 ein Produkt B und über die Zuführungsleitung 14 ein Produkt C in die jeweilige Verteilereinrichtung 1 einströmen. Über die an die Verteilereinrichtungen 1 angeschlossenen Abführungsleitungen 15 bis 20 gelangen die über die Zuführungsleitungen 12, 13 und 14 einströmenden Produkte A, B und C in die Vorratsbehälter 10, wobei dank der Verteilereinrichtungen 1 die Vorratsbehälter 10 in wahlweise vorgebbaren Mischungsverhältnissen mit den Produkten A, B und C befüllt werden können.

Es versteht sich von selbst, daß die Vorratsbehälter 10 wahlweise in unterschiedlichsten Mischungsverhältnissen mit den Produkten A, B und C befüllt werden können. Insofern ist die nachfolgende Beschreibung lediglich beispielhaft zu verstehen.

Über die Abführungsleitung 15 strömen beispielsweise über die einzelnen Verteilereinrichtungen 1 die Produkte A, B und C in einem gleichen Mischungsverhältnis, so daß der mit Bezug auf die Zeichnungsebene nach Fig. 3 oberste Behälter 10 eine aus gleichen Teilen gebildete Mischung aus den Produkten A, B und C enthält.

Der mit Bezug auf die Zeichnungsebene nach Fig. 3 unterste Behälter 10 wird hingegen beispielsweise nur mit den Produkten A und B befüllt. Die Abführungsleitung 20, die an diejenige Verteilereinrichtung 1 angeschlossen ist, die an die Zuführungsleitung 14 gekoppelt ist, ist in diesem Fall gesperrt, das heißt nicht geöffnet, so daß aus der mit Bezug auf die Zeichnungsebene nach Fig. 3 rechten Verteilereinrichtung 1, die an die Zuführungsleitung 14 für das Produkt C angeschlossen ist, kein Produkt C in die Abführungsleitung 20 einströmt.

Wie die beispielhafte Darstellung nach Fig. 3 zeigt, können die Verteilereinrichtungen 1 hinsichtlich ihres Produktzu- und/oder -abstromes so eingestellt werden, daß die an die Verteilereinrichtungen 1 jeweils angeschlossenen Behälter 10 wunschgemäß nach Menge und Zusammensetzung mit den aus den Zuführungsleitungen 12, 13 und 14 stammenden fließfähigen Medien befüllt werden. Dabei können die Abführungsleitungen 15 bis 20, wie vorstehend bereits erläutert, vorzugsweise durch fernsteuerbare Ventile entweder geöffnet oder geschlossen werden.

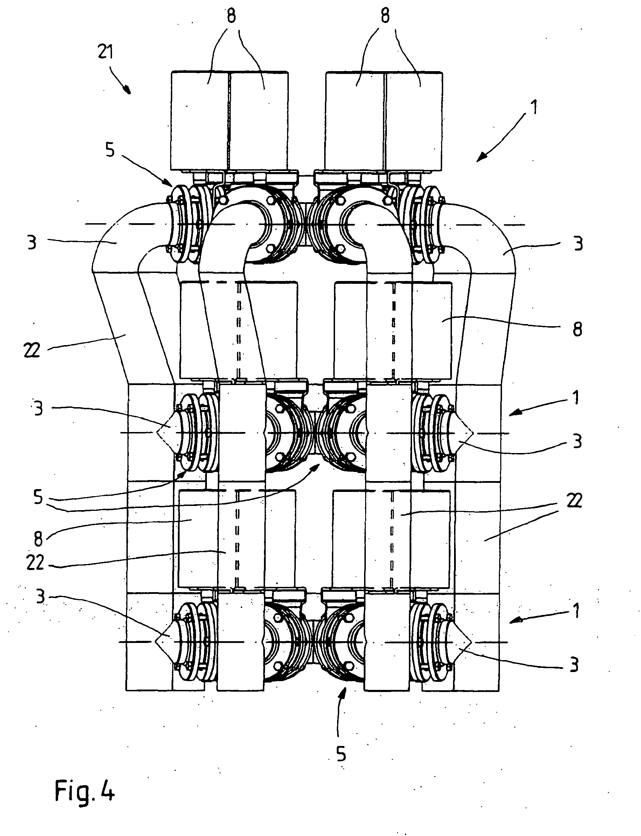

Die in Fig. 3 beispielhaft gezeigten Verteilereinrichtungen 1 können erfindungsgemäß zu einem Verteilermodul zusammengeschlossen werden, wie dies in Fig. 4 gezeigt ist.

Wie die schematische Darstellung nach Fig. 4 erkennen läßt, sind die insgesamt drei Verteilereinrichtungen 1 nach Fig. 3 zu einem gemeinsamen Verteilermodul 21 zusammengeschlossen. Dabei sind die jeweils einander zugehörigen Abführungsrohre 3 der Verteilereinrichtungen 1 an eine gemeinsame Rohrleitung 22 angeschlossen, wodurch der anlagenseitige Aufwand verringert ist.

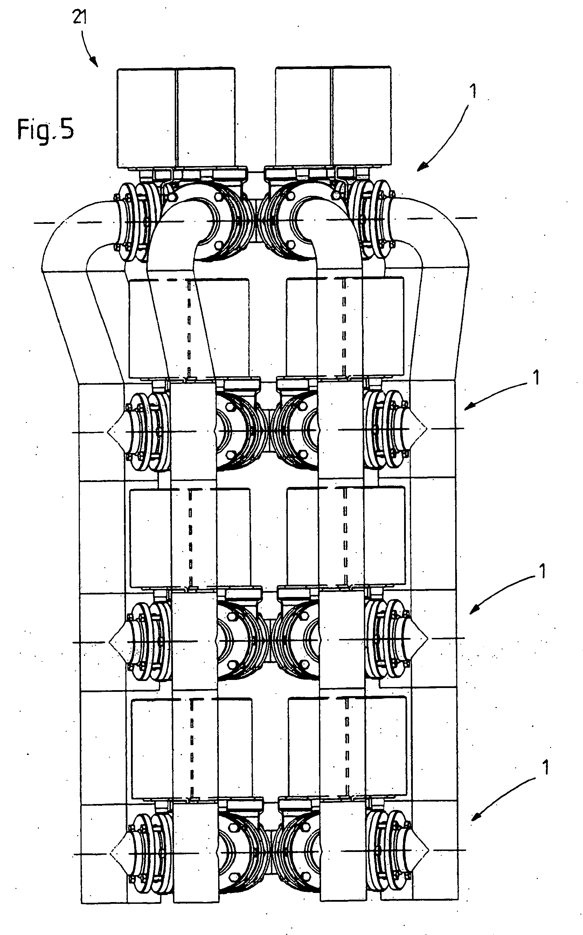

Fig. 5 zeigt ein Verteilermodul 21, das über insgesamt vier Verteilereinrichtungen 1 verfügt.

Wie die Darstellungen nach den Fign. 2, 4 und 5 erkennen lassen, kann ein Verteilermodul 21 aus einer Mehrzahl von Verteilereinrichtungen 1 bestehen. Dabei zeigen die Fign. 4 und 5 ein Verteilermodul 21 mit insgesamt drei bzw. vier Verteilereinrichtungen 1. Es versteht sich von selbst, daß ein Verteilermodul 21 auch zwei, fünf, sechs oder mehr Verteilereinrichtungen 1 umfassen kann.

Zur Reinigung einer Strömungsanlage, wie sie beispielsweise in Fig. 3 schematisch dargestellt ist, dienen Reinigungsflüssigkeiten, die zum Zwecke der Reinigung der Rohrleitungen durch diese hindurchgeführt werden. Dank der Verteilereinrichtungen 1 kann eine Reinigungsflüssigkeit durch sämtliche Rohrleitungen geführt werden, ohne daß es erforderlich wäre, Abführungsleitungen umzurüsten, das heißt an die jeweiligen Verteilereinrichtungen anzuschließen. Zur Durchströmung sämtlicher Rohrleitungen mit einer Reinigungsflüssigkeit ist es lediglich erforderlich, die Ventile aller Verteilereinrichtungen 1 zu öffnen. Da die Verteilereinrichtungen 1 in der schon vorbeschriebenen Weise über Verteilerrohre 4 verfügen, die keinerlei Stromtodbereiche aufweisen, ist eine Reinigung sämtlicher Rohre in einfacher Weise möglich, wobei gleichzeitig sichergestellt ist, daß keinerlei unerwünschten Reste einer Reinigungsflüssigkeit in den Rohrleitungen zurückbleiben.

Fig. 6 zeigt eine Verteilereinrichtung 1 nach dem Stand der Technik, wie einleitend bereits erläutert. Von entscheidendem Nachteil bei der Verteilereinrichtung 1 nach dem Stand der Technik gemäß Fig. 6 ist, daß das Verteilerrohr 4 der Verteilereinrichtung 1 einen Stromtodbereich 23 ausbildet, der insbesondere aus hygienischen Gründen von Nachteil ist. Zudem besteht die Gefahr, daß sich in unerwünschter Weise Restprodukte einer vorangegangenen Rohrbeschickung, zum Beispiel Reinigungsflüssigkeit, mit der oder den Flüssigkeiten einer nachfolgenden Rohrbeschickung vermischen. Bei der Verteilereinrichtung gemäß DE-C-4421384 ist diese bei den bekannten Verteilereinrichtungen gemäß Figur 6 bestehende Gefahr konstruktiv ausgeschlossen.

### Bezugszeichenliste

- 1: Verteilereinrichtung
- 2: Zuführungsrohr
- 3: Abführungsrohr
- 4: Verteilerrohr
- 5: Anschlußeinrichtung
- 6: Koppelelement
- 7: Koppelelement
- 8: Gehäuse
- 10: Behälter
- 12-14: Zuführungsleitung
- 15-20: Abführungsleitung
- 21: Verteilermodul
- 22: Rohrleitung
- 23: Stromtodbereich
- 24: Einströmrichtung
- 25: Anschluß
- 26: Ablaßöffnung

- A: Produkt (fließfähiges Medium)
- B: Produkt (fließfähiges Medium)
- C: Produkt (fließfähiges Medium)

## Patentansprüche

1. Verteilermodul für ein fließfähiges Medium mit einer Mehrzahl von in Reihe hintereinander geschalteten Verteilereinrichtungen (1), die jeweils ein als geschlossenes Ringrohr ausgebildetes Verteilerrohr (4) zum Anschluß an ein Zuführungsrohr (2) und an mehrere Abführungsrohre (3) aufweisen, wobei die einander zugehörigen Abführungsrohre (3) mehrerer Verteilereinrichtungen (1) an eine gemeinsame Rohrleitung (22) angeschlossen sind.

2. Verteilermodul nach Anspruch 1, **gekennzeichnet durch** am Verteilerrohr (4) angeordnete Anschlußeinrichtungen (5) für den jeweiligen strömungstechnischen Anschluß eines Abführungsrohres (3).

3. Verteilermodul nach Anspruch 2, **dadurch gekennzeichnet, daß** die Anschlußeinrichtungen (5) jeweils Verschlußvorrichtungen aufweisen.

4. Verteilermodul nach Anspruch 3, **dadurch gekennzeichnet, daß** die Verschlußeinrichtungen (5) vorzugsweise fernsteuerbare Ventile sind.

5. Verteilermodul nach einem der vorhergehenden Ansprüche 2 bis 4, **dadurch gekennzeichnet, daß** die Anschlußeinrichtungen (5) zur vorzugsweise lösbaren Anordnung jeweils eines Abführungsrohres (3) Koppelelemente (6, 7) aufweisen.

## Claims

1. A distribution module for a free-flowing medium comprising a plurality of distribution devices (1) connected downstream in series, each of which encompass a distribution pipe (4), which is embodied as a closed ring pipe, for connecting to a feed pipe (2) and to several delivery pipes (3), wherein the delivery pipes (3), which belong to one another, of several distribution devices (1) are connected to a common pipe (22).

2. The distribution module according to claim 1, **characterized by** connection devices (5) arranged at the distribution pipe (4) for the respective fluidic connection of a delivery pipe (3).

3. The distribution module according to claim 2, **characterized in that** the connection devices (5) in each case encompass closing devices.

4. The distribution module according to claim 3, **characterized in that** the closing devices (5) are preferably remotely controllable valves.

5. The distribution module according to one of the preceding claims 2 to 4, **characterized in that** the connecting devices (5) encompass coupling elements (6, 7) for a preferably detachable arrangement of a respective delivery pipe (3).

## Revendications

1. Module de distribution pour un fluide capable de s'écouler, avec une pluralité de dispositifs de distribution (1) raccordés les uns à la suite des autres en une rangée, comportant chacun un tuyau de distribution (4) conçu comme un tuyau annulaire, pour le raccordement à un tuyau d'alimentation (2) et à plusieurs tuyaux d'évacuation (3), les tuyaux d'évacuation (3) correspondants de plusieurs dispositifs de distribution (1) étant reliées à une conduite (22) commune.

2. Module de distribution selon la revendication 1, **caractérisé par** des dispositifs de raccordement (5) disposés sur le tuyau de distribution (4), pour le raccordement fluidique d'un tuyau d'évacuation (3).

3. Module de distribution selon la revendication 2, **caractérisé en ce que** les dispositifs de raccordement (5) comportent des dispositifs de fermeture respectifs.

4. Module de distribution selon la revendication 3, **caractérisé en ce que** les dispositifs de fermeture (5) sont de préférence des soupapes à télécommande.

5. Module de distribution selon l'une des revendications 2 à 4, **caractérisé en ce que** les dispositifs de raccordement (5) comportent des éléments d'accouplement (6, 7) pour le montage de préférence démontable de chacun des tuyaux d'évacuation (3).
